# EUROPÄISCHE PATENTSCHRIFT

(11) **EP 2 301 867 B1**
(45) Veröffentlichungstag und Bekanntmachung des Hinweises auf die Patenterteilung: **06.06.2018**
(21) Anmeldenummer: 10174380.5
(22) Anmeldetag: 27.08.2010
(51) Int. Cl.: B65G 47/51, B65G 35/08, B65G 19/02

(54) **Einrichtung zum Transfer von Behältern zwischen zwei Bearbeitungsstationen sowie ein Verfahren zum Transfer von Behältern zwischen zwei Bearbeitungsstationen**
Device for transferring containers between two processing stations and method for transferring containers between two processing stations
Dispositif de transfert de récipients entre deux stations de traitement et procédé de transfert de récipients entre deux stations de traitement

(30) Priorität: 24.09.2009 DE 102009044104
(43) Veröffentlichungstag der Anmeldung: 30.03.2011
(73) Patentinhaber: Krones AG, 93073 Neutraubling (DE)
(72) Erfinder: Hausladen, Wolfgang, 93073 Neutraubling (DE); Winzinger, Frank, 93073 Neutraubling (DE); Weiss, Johannes, 93073 Neutraubling (DE)
(74) Vertreter: Benninger, Johannes

(56) Entgegenhaltungen:
- EP-A1- 0 486 360
- EP-A1- 1 645 340
- WO-A1-01/51391
- WO-A1-2009/130004
- DE-A1- 10 040 532
- DE-A1- 10 329 785
- DE-A1-102006 056 943
- DE-A1-102008 013 951
- DE-U1-202005 013 552
- US-A1- 2004 025 909

## Beschreibung

Die vorliegende Erfindung betrifft eine Vorrichtung zum Transfer von Behältern umfassend zwei Bearbeitungsstationen sowie ein entsprechendes Verfahren.

### Stand der Technik

Die Erfindung soll zum Transfer von Hohlkörpern, insbesondere Plastikbehältnissen, zwischen zwei Bearbeitungsstationen einer Getränkeabfüllvorrichtung, beispielsweise zwischen einer Blasmaschine und einer Etikettiermaschine verwendet werden.

Aus EP 1 107 588 B1 ist eine Vorrichtung bekannt, bei der die in einer Blasmaschine kontinuierlich erzeugten Kunststoffflaschen über einen Auslaufstern im Auslauf der Blasmaschine einer Etikettiermaschine zugeführt werden, so dass die Flaschen unmittelbar nach Verlassen der Blasmaschine in kontinuierlichem Strom etikettiert werden. Vorzugsweise wird der Auslaufstern der Blasformmaschine zugleich als Einlaufstern für die Etikettiermaschine verwendet.

US 5996322 beschreibt eine Flaschenfüllstation, die aus einer Vorrichtung zur Herstellung von Behältnissen, vorzugsweise einer Blasmaschine, und einer Füllvorrichtung besteht. Die beiden Vorrichtungen sind dabei so nah wie möglich angeordnet, wobei sich zwischen diesen eine möglichst kurze Fördereinheit befindet. Gegebenenfalls kann eine zusätzliche Einheit vorgesehen sein, um die Flaschen zeitweise zurückzuhalten.

DE 10 2006 013 800 B3 beschreibt ebenfalls ein Transportsystem für den Transport von Flaschen oder ähnlichem zwischen einer ersten und einer zweiten Maschine, beispielsweise zwischen einer Blasmaschine und einer Füllstation mit einem Transferelement in Form eines Transfersternes mit mehreren Behälteraufnahmen. DE 199 28 325 A1 offenbart eine Abfüllvorrichtung für Flaschen bei der eine Blasmaschine für Flaschen, eine Spülmaschine und eine Füllmaschine hintereinander geschaltet sind, wobei die Flaschen durch formschlüssige Transportelemente zwischen den Maschinen überführt werden. Bei den Transportelementen handelt es sich um so genannten Ein- bzw. Auslaufsterne mit Greifern.

DE 10 2008 013 951 A1 beschreibt eine Vorrichtung umfassend eine erste Bearbeitungsstation und eine zweite Bearbeitungsstation sowie eine Einrichtung zum Transfer von Behältern von der ersten Bearbeitungsstation zu der zweiten Bearbeitungsstation mit einer ersten Übergabeeinheit, einer zweiten Übergabeeinheit, individuellen Transporteinheiten für die Behälter, einer Transportschleife, in der die Transporteinheiten geführt sind und einer Steuereinheit. Die Vorrichtung erlaubt eine statische oder dynamische Zwischenspeicherung der Gegenstände (bspw. leere und / oder volle PET- Flaschen) zwischen den beiden Bearbeitungsstationen. Jedem Gegenstand ist eine eigene Greifeinrichtung zugeordnet, diese laufen an Schienen, die als Zwischenspeicher dienen, wobei Greifer mit bzw. ohne Gegenstand jeweils auf unterschiedlichen Schienen verlaufen.

Probleme bei den vorbeschriebenen Transfervorrichtungen können sich ergeben, wenn aufgrund von Problemen in der ersten Vorrichtung Positionen in den Übergabesternen / der Transfervorrichtung nicht belegt sind, so dass beispielsweise das Etikettieren der Behältnisse oder das Befüllen in einer nachgeschalteten Füllvorrichtung "ins Leere" geht.

Die Aufgabe der Erfindung besteht darin, die gegebenenfalls beim Auslauf aus einer ersten Bearbeitungsstation entstehenden Lücken zu schließen, um eine kontinuierliche Bearbeitung durch eine nachgeschaltete zweite Bearbeitungsstation zu ermöglichen.

Die obige Aufgabe wird durch eine Vorrichtung gelöst, die die Merkmale des Patentanspruchs 1 umfasst. Die Aufgabe wird weiterhin durch ein Verfahren zum lückenlosen Transfer gemäß den Merkmalen des Patentanspruchs 4 gelöst.

### Beschreibung

Die vorliegende Erfindung wird vorzugsweise bei einer Getränkeabfüllanlage eingesetzt. Eine solche Anlage besteht beispielsweise aus einer Blasformmaschine, einer Etikettiervorrichtung, einer Füllvorrichtung und einer Verschlussvorrichtung.
Die Erfindung betrifft eine Vorrichtung umfassend zwei Bearbeitungsstationen, insbesondere eine erste Bearbeitungsstation und eine zweite Bearbeitungsstation, mit einer Einrichtung zum Transfer von Behältern von der ersten Bearbeitungsstation zu der zweiten Bearbeitungsstation. Die Einrichtung umfasst zwei Übergabeeinheiten und einen Puffer mit individuell steuerbaren Transporteinheiten für die Behälter sowie eine Steuereinheit.
Die Transporteinheiten werden in einer beispielsweise als Endlosschleife ausgebildeten Transportbahn bzw. Transportschleife geführt, die an der ersten und an einer zweiten Übergabeeinheit jeweils eine Umlenkung aufweist. Vor und nach jeder Übergabeeinheit sind jeweils mindestens eine Antriebsvorrichtung vorgesehen, die die Transporteinheiten abbremsen und / oder beschleunigen. Insbesondere Zum Beschleunigen der Transporteinheiten ist nach jeder Übergabeeinheit eine Antriebseinheit angeordnet und zum Abbremsen der Transporteinheiten ist vor jeder Übergabeeinheit eine Antriebseinheit angeordnet. Gemäß einer bevorzugten Ausführungsform werden leere Transportwagen an einer der ersten Übergabeeinheit vorgelagerten Antriebseinheit abgebremst und angestaut. Anschließend erfolgt an der ersten Übergabeeinheit eine kontrollierte Beladung einzelner Transportwagen mit jeweils einem Behältnis. Die beladene Transporteinheit wird anschließend durch eine der ersten Übergabeeinheit nachgeschalteten Antriebsvorrichtung in Richtung zweite Übergabeeinheit beschleunigt und bei dieser durch eine weitere Antriebsvorrichtung wiederum abgebremst, so dass vor der zweiten Übergabeeinheit mit Behältnissen beladene Transporteinheiten angestaut werden, die den Puffer bilden.
Die Transporteinheiten werden dabei derart gesteuert, dass der Puffer mit der zweiten Bearbeitungsstation zusammenwirkt, so dass eine Übergabe der Behälter vom Puffer zur zweiten Bearbeitungsstation zeitsynchron erfolgt.
Mit Hilfe des Puffers wird somit ein kontinuierlicher Betrieb der zweiten Bearbeitungsstation ermöglicht, und zwar unabhängig von der Anlieferung der Behältnisse durch die erste Bearbeitungsstation, insbesondere ist ein kontinuierlicher lückenloser Betrieb der zweiten Bearbeitungsstation möglich, auch wenn die Anlieferung von Behältnissen durch die erste Bearbeitungsstation lückenhaft erfolgt.

Der ersten Übergabeeinheit, an der die von der ersten Bearbeitungsstation ankommenden Behältnisse an das Behältertransfersystem übergeben werden, ist eine steuerbare Sperrvorrichtung zugeordnet. Insbesondere werden leere Transporteinheiten vor der ersten Übergabeeinheit angestaut und mittels oben genannter Sperrvorrichtung kontrolliert zur Aufnahme eines von einer ersten Bearbeitungsstation herangeführten Behältnisses freigegeben. Ein Öffnen der Sperrvorrichtung und somit eine Freigabe einer Transporteinheit erfolgt dabei nur, wenn zuvor die Ankunft eines Behältnisses aus der ersten Bearbeitungsstation detektiert wurde. Als Detektionsvorrichtung findet beispielsweise eine Lichtschranke oder ähnliches Verwendung. Insbesondere bleibt die Sperrvorrichtung geschlossen, so dass keine Freisetzung einer Transporteinheit erfolgt, wenn eine Lücke im ankommenden Behälterstrom detektiert wird.

Gemäß einer bevorzugten Ausführungsform handelt es sich bei der ersten Bearbeitungsstation um eine Blasformmaschine. Die von der Blasformmaschine erzeugten Behältnisse werden beispielsweise mittels Bild erkennender Algorithmen überprüft und fehlerhafte Behältnisse automatisch detektiert und verworfen. Dadurch können Lücken im Behälterstrom, der der zweiten Bearbeitungsstation zugeführt wird, entstehen. Werden diese Lücken nicht ausgeglichen, dann muss die zweite Bearbeitungsstation entweder kurzzeitig angehalten werden, oder aber die bearbeitenden Schritte gehen ins Leere, da kein zu bearbeitender Gegenstand vorhanden ist.

Vorzugsweise handelt es sich bei der zweiten Bearbeitungsstation um eine Etikettiervorrichtung. Die von der Blasformmaschine hergestellten Hohlkörper werden vorzugsweise zuerst etikettiert und erst anschließend befüllt. Dadurch wird verhindert, dass an den Hohlkörpern Flüssigkeit kondensiert, was eine Befestigung der Etiketten stark erschwert.

Sind im ankommenden Behälterstrom Lücken vorhanden (s.o.), so muss herkömmlicherweise das Etikettieraggregat angehalten und anschließend wieder in Betrieb genommen und beschleunigt werden. Dadurch ist ein kontinuierlicher Betrieb des Etikettierers innerhalb der Vorrichtung möglich. Erfindungsgemäß ist der Puffer für die Behältnisse der zweiten Übergabeeinheit zugeordnet, bei der die Übergabe der Behältnisse an die zweite Bearbeitungseinheit, insbesondere den Etikettierer, erfolgt. Die Transportbahn besteht beispielsweise aus zwei parallel angeordneten Metallrohren oder C-Profilen oder einem vergleichbaren Führungssystem.
Aus diesem Puffer wird der zur zweiten Bearbeitungsstation zugeführte Behälterstrom generiert, indem an der zweiten Übergabeeinheit eine Übergabe der Behältnisse von den Transporteinheiten beispielsweise an einen Einlaufstern der zweiten Bearbeitungsstation erfolgt.
Gemäß einer bevorzugten Ausführungsform sind die Antriebsvorrichtungen rotierende Bürstenantriebe. Vorzugsweise weisen die Transporteinheiten an der den Antriebsvorrichtungen zugewandten Seite ebenfalls Bürsten auf, die mit den rotierenden Bürstenantrieben nach Art eines Klettverschlusses zusammenwirken. Anstelle von Bürstenantrieben können auch motorisch angetriebene Riemensysteme verwendet werden, wobei der Riemen in die Transporteinheit eingreift und diese beschleunigt oder abbremst.
Ebenso denkbar sind Magnet- Kopplungen, welche die Bürstenantriebe ersetzen. Die Magnete können die Transportwägen von dem Einlaufstern bzw. Auslaufstern abstoßen oder anziehen. Dabei ist es erforderlich, dass an den Transportwägen ferromagnetische Teile oder Dauermagnete angeordnet sind, welche in Wechselwirkung zu feststehenden oder an dem Endlosband der Transportbahn angebrachten Magneten sind.
Als Übergabeeinheiten werden vorzugsweise Sägezahnsterne verwendet, die einen einfachen Weitertransport der Transporteinheiten bewirken. Beispielsweise werden die Behältnisse über einen Auslaufstern von der ersten Bearbeitungsstation herantransportiert und an die erste Übergabeeinheit in Form eines Sägezahnsterns übergeben.
Die verwendeten Transporteinheiten, auch Transportwagen genannt, sind einfach aufgebaut und weisen vorzugsweise ein passives Greifersystem zum Greifen, Halten und Transportieren von Behältnissen auf. Das passive Greifsystem ist vorzugsweise als Klammer ausgebildet und kann mit Hilfe von Federn automatisch an die Größe des zu transportierenden Behältnisses, insbesondere an die Dicke des Flaschenhalses unterhalb des Tragringes, anpasst werden. Jede Transporteinheit weist ein erstes Führungselement, beispielsweise in Form von mindestens einer Rolle zur Führung in der Transportbahn auf. Weiterhin weist jede Transporteinheit ein zweites Führungselement auf, über die die Transporteinheit an den Übergabeeinheiten aufgenommen und aktiv mitgenommen bzw. geführt wird. Bei dem zweiten Führungselement kann es sich ebenfalls um mindestens eine Rolle oder ähnliches handeln.
Die Transporteinheiten werden lose in einer Transportschleife bzw. Transportbahn geführt und sind mit variablen Geschwindigkeiten fahrbar. Insbesondere werden sie nach Aufnahme von Behältnissen an der ersten Übergabeeinheit bzw. dem Einlaufstern beschleunigt und anschließend vor der zweiten Übergabeeinheit bzw. dem Auslaufstern wiederum abgebremst.
Gemäß einer bevorzugten Ausführungsform kann das Greifsystem der Transportwagen für die Behältnisse von zwei Seiten her beladen werden. Dadurch lassen sich die Transportwagen in verschiedenen Systemen einsetzen. Vorzugsweise sind die Transportwagen etwas breiter als die transportierten Behältnisse um Zusammenstöße der Behältnisse zu vermeiden.
Gemäß einer weiteren Ausführungsform weisen die Transportwagen an den Seiten Pufferelemente zur Vermeidung bzw. Dämpfung von Zusammenstößen auf. Dabei kann es sich beispielsweise um Gummipuffer oder ähnliches handeln.

Die Erfindung betrifft weiterhin ein Verfahren zum Transfer von Behältern von einer ersten Bearbeitungsstation zu einer zweiten Bearbeitungsstation einer vorbeschriebenen Vorrichtung, bei dem in dem Puffer gespeicherte steuerbare mit Behältern beladene Transporteinheiten individuell verfahren werden. Dabei wirkt der Puffer mit der zweiten Bearbeitungsstation der Vorrichtung derart zusammen, dass die Behälter vom Puffer zur zweiten Bearbeitungsstation zeitsynchron übergeben werden. Insbesondere erfolgt die Übergabe an der zweiten Bearbeitungsstation unabhängig davon, ob die Behälter zeitsynchron, d.h. in einem kontinuierlichen, ununterbrochenen Behälterstrom an der Übergebeeinheit von der ersten Bearbeitungsstation angeliefert werden.

Das Verfahren ist innerhalb einer erfindungsgemäßen Vorrichtung durchgeführt. Das Verfahren läuft beispielsweise in folgenden Schritten ab: Zuerst wird die Ankunft eines Behältnisses von der ersten Bearbeitungsstation detektiert. Anschließend wird eine Sperrvorrichtung gelöst, so dass eine Transporteinheit an die erste Übergabeeinheit freigegeben wird. Die Transporteinheit nimmt an der ersten Übergabeeinheit ein Behältnis von der ersten Bearbeitungsstation auf. Die beladene Transporteinheit wird anschließend über die Antriebseinheit in Richtung der zweiten Übergabeeinheit beschleunigt und vor der zweiten Übergabeeinheit wieder abgebremst und angestaut. Die so gespeicherten Behältnisse werden an der zweiten Übergabeeinheit nach Bedarf kontinuierlich getaktet in die zweite Bearbeitungsstation eingespeist.
Die leere Transporteinheit wird anschließend in Richtung erster Übergabeeinheit beschleunigt und vor dieser wiederum abgebremst und angestaut, so dass sie wieder für die erneute Beladung mit einem von der ersten Bearbeitungsstation zugeführten Behältnis zur Verfügung stehen.
Gemäß einer bevorzugten Ausführungsform werden die Behältnisse an der zweiten Übergabeeinheit direkt an einen Einlaufstern der zweiten Bearbeitungsstation, insbesondere eines Etikettierers übergeben. Alternativ können die Behältnisse auch erst an mindestens ein zwischengeschaltetes Neckhandling System übergeben werden. Dies ist insbesondere erforderlich, wenn eine entgegengesetzte Laufrichtung der Behältnisse in der zweiten Bearbeitungsstation entgegen der Laufrichtung nach der Übergabe der Behältnisse erforderlich ist.
Die beschriebene Erfindung findet vorzugsweise Verwendung zum Transfer von Kunststoffbehältnissen, insbesondere Kunststoffflaschen, insbesondere aus PET, die einen Tragring am Flaschenhals aufweisen. Die Kunststoffflaschen können hierbei gefüllt oder leer sein. Die Erfindung kann auch zum Transport von Vorformlingen verwendet werden.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Anordnung einer erfindungsgemäßen Vorrichtung mit zwei Bearbeitungsstationen;
Figur 2 zeigt eine Detailansicht eines Behältertransfersystems mit gerader Wagenführung sowie den Auslaufstern aus einer ersten Bearbeitungsstation und den Einlaufstern in eine zweite Bearbeitungsstation;
Figur 3 zeigt eine Detailansicht der Übergabestelle zwischen dem Auslaufstern der ersten Bearbeitungsstation und dem Behältertransfersystem;
Figur 4 zeigt die Anordnung und Fixierung transportierter Flaschen in einem Transportwagen des Behältertransfersystems;
Figur 5 zeigt die Möglichkeit der beidseitigen Beladung eines Transportwagens;
Fig.6a/b zeigen ein aktives Greifsystem mit erhöhter Klammer in verschiedenen Ansichten;
Fig.7a bis f zeigen eine weitere Ausführungsform eines aktiven Greifsystems mit einer flachen Klammer in verschiedenen Ansichten und in verschiedenen Öffnungszuständen;
Fig.8 zeigt die Freisetzung eines Behältnisses aus einer aktiven Klammer;
Figur 9 zeigt eine schematische Anordnung einer alternativen erfindungsgemäßen Vorrichtung mit zwei Bearbeitungsstationen;
Figur 10 zeigt eine Detailansicht eines Behältertransfersystems mit überkreuzter Wagenführung mit Auslaufstern aus einer ersten Bearbeitungsstation und Einlaufstern in eine zweite Bearbeitungsstation;

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

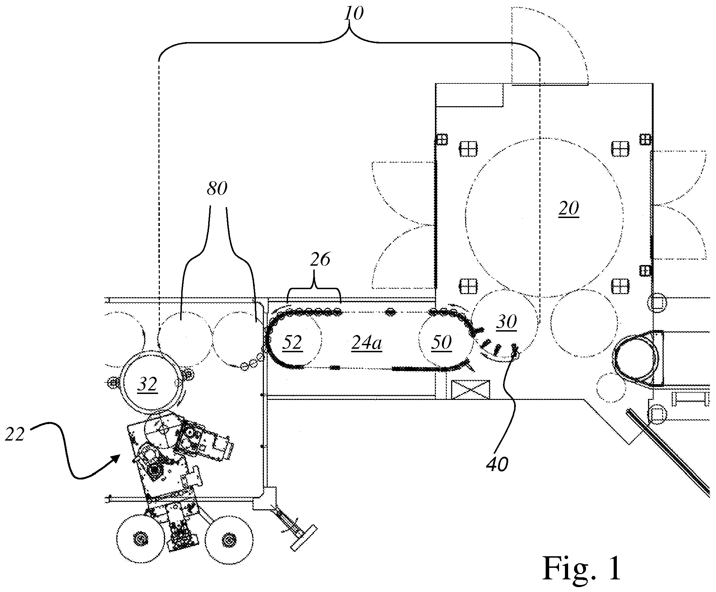

**Figur 1** zeigt eine schematische Anordnung einer zwischen einer Blasformmaschine 20 und einer Etikettiermaschine 22 angeordneten Einrichtung 10 zum Transfer von Behältern mit einem Behältertransfersystem mit gerader Wagenführung 24a.

Die von der Blasformmaschine 20 hergestellten Flaschen 40 werden über einen Auslaufstern 30 an einen Sägezahnstern 50 eines Behältertransfersystems 24a übergeben und zum Sägezahnstern 52 transportiert, wo sie an zwei Neckhandlingsysteme 80 und anschließend an den Einlaufstern 32 der Etikettiervorrichtung 22 übergeben werden.

Das Behältertransfersystem 24a dient dazu, einzelne Lücken, die im Auslaufstern 30 nach der Blasmaschine 20 entstehen können, zu schließen und somit einen kontinuierlichen Betrieb der Etikettiermaschine 22 zu ermöglichen.

Einzelne Lücken im Auslaufstern 30 der Blasmaschine 20 können entstehen, wenn mittels eines Detektionssystems, beispielsweise mittels einer Lichtschranke, fehlerhafte oder defekte Flaschen 40 identifiziert und automatisch verworfen werden. Mit dem Behältertransfersystem 24a wird verhindert, dass die weiteren Verarbeitungsschritte, insbesondere das Etikettieren, Befüllen etc. mit diesen defekten Flaschen 40 durchgeführt wird und diese fehlerhaften Behältnisse anschließend aussortiert werden müssen.

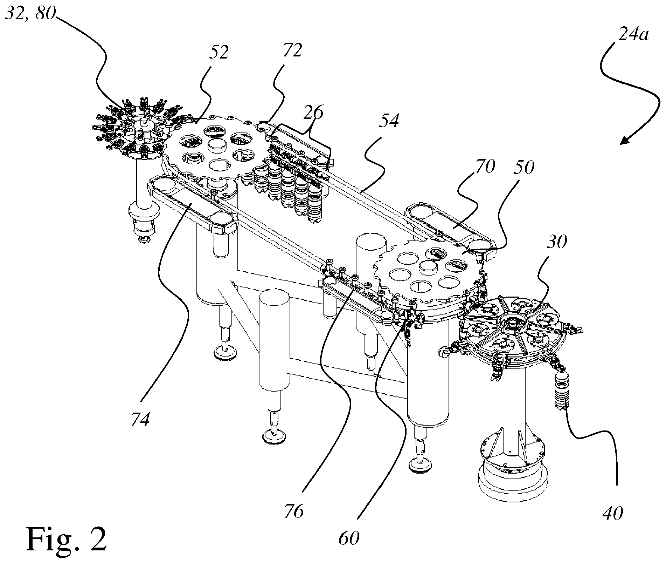

**Figur 2** zeigt eine Ansicht eines Behältertransfersystems mit gerader Wagenführung 24a zwischen einem Auslaufstern 30 aus einer ersten Vorrichtung bzw. Bearbeitungsstation, insbesondere einer Blasformmaschine 20 und einem Einlaufstern 32 oder einem Neckhandlingsystem 80 in eine zweite Vorrichtung bzw. Bearbeitungsstation, insbesondere in eine Etikettiermaschine 22.

Das Behältertransfersystem 24a besteht aus zwei Sägezahnsternen 50, 52, die durch ein Führungssystem 54 miteinander verbunden sind. Gemäß der dargestellten Ausführungsform besteht das Führungssystem 54 aus zwei parallelen Führungsschienen. Dabei kann es sich vorzugsweise um Metallrohre, C- Profile oder ähnlichem handeln.

Wird durch den Auslaufstern 30 der Blasmaschine 20 ein Behälter, insbesondere eine Flasche 40, zum Behältertransfersystem transferiert, erfolgt eine Übergabe des Behälters 40 durch so genanntes Neckhandling.

Im Führungssystem 54 sind Transportwagen 60 zur Aufnahme der zugeführten Flaschen 40 angeordnet. Die Transportwagen 60 sind dabei so konstruiert, dass ihre Breite etwas mehr als der maximalen Breite der zu transportierenden Flaschen 40 entspricht.

Weiterhin sind am Führungssystem 54 Bürstenantriebe 70, 72, 74 und 76 zum Antreiben und Abstoppen der leeren oder beladenen Transportwagen 60 angeordnet.

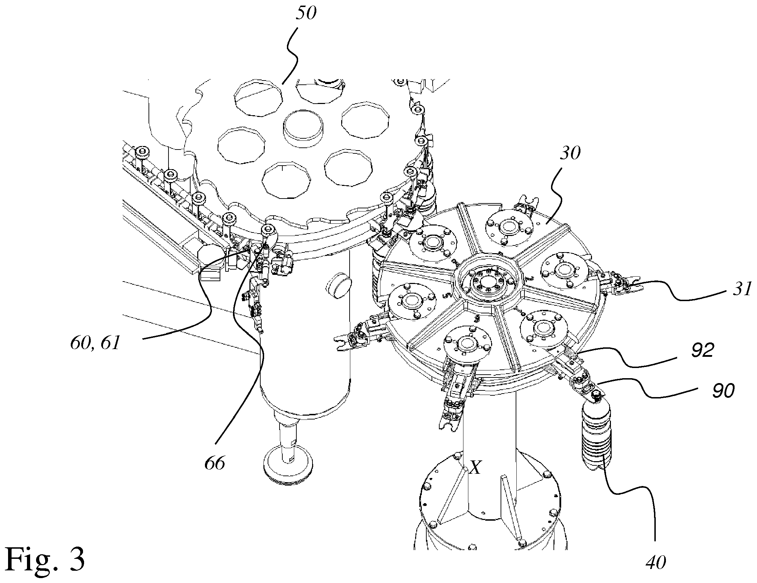

**Figur 3** stellt detailliert die Situation zwischen Sägezahnstern 50 und Auslaufstern 30 der Blasmaschine 20 dar. Im Auslaufstern 30 werden die Flaschen 40 beispielsweise in halboffenen aktiven Klammern 31 gehalten. Die Öffnungsbreiten der Greiferbacken 90 der Klammern 31 können im gezeigten Ausführungsbeispiel über Federn (nicht gezeigt) entsprechend der Breite des Flaschenhalses reguliert werden.

Ein leerer Transportwagen 60 wird nur zur Aufnahme einer über den Auslaufstern 30 heran transportierten Flasche 40 bereitgestellt, wenn über ein Detektionssystem (nicht dargestellt) eine Flasche 40 in der entsprechenden Klammer 31 des Auslaufsterns detektiert wurde. Nur dann öffnet sich die Wagensperre 66 und lässt einen Transportwagen 60 frei.

Wird beispielsweise mittels einer Lichtschranke festgestellt, dass im Auslaufstern 30 der Blasformmaschine 20 eine Flasche 40 fehlt, dann schließt die Wagensperre 66, so dass kein Transportwagen 60 in den Sägezahnstern 50 einfährt. Wird anschließend eine Flasche 40 im Auslaufstern 30 geortet, so öffnet die Wagensperre 66 taktgerecht. Somit wird mit dem Behältertransportsystem 24 a sichergestellt, dass nur mit Flaschen 40 bestückte Transportwagen 60 vom Auslaufstern 30 der Blasformmaschine 20 zum Einlaufstern 32 der Etikettiermaschine 22 transportiert werden.

Wie in **Figur 2** dargestellt, transportiert der Sägezahnstern 50 den mit einer Flasche 40 bestückten Transportwagen 60 über ein Führungssystem 54 nach dem Mink- Ketten-System (beispielsweise Förderketten ausgestattet mit Mink Keilriemen- Bürsten oder ähnlichem) zu einem ersten rotierenden Bürstenantrieb 70. Die Bürste greift in den Transportwagen 60 und beschleunigt diesen in Richtung des zweiten Sägezahnsterns 52, der sich in unmittelbarer Nachbarschaft zum Einlaufstern 32 der Etikettiermaschine 22 oder einem Neckhandlingsystem 80 befindet und die Übergabe der Flaschen 40 zu diesem bewirkt.

Vor dem zweiten Sägezahnstern 52 werden die mit Flaschen 40 bestückten Transportwagen 60 an einem zweiten Bürstenantrieb 72 angestaut, um eine Lückenbildung beim Einlauf in den zweiten Sägezahnstern 52 zu vermeiden und eine lückenlose Übergabe an den Einlaufstern 32 der Etikettiermaschine 22 oder das Neckhandlingsystem 80 zu ermöglichen.

Der Sägezahnstern 52 wird synchron zum Einlaufstern 32 der Etikettiermaschine 22 angetrieben, wodurch die Wagen 60 teilungsgerecht zum Übergabepunkt transportiert werden.

Der Einlaufstern 32 der Etikettiermaschine 22 weist gesteuerte Klammern 33 auf. Diese werden am Übergabepunkt zwischen Sägezahnstern 52 und Einlaufstern 32 geschlossen und ziehen die Flaschen aus den gefederten Greifern 61 der Transportwagen 60.

Die nunmehr leeren Transportwagen 60 werden durch den Sägezahnstern 52 zu einem dritten Bürstenförderer 74 transportiert und übergeben, durch den die Transportwagen 60 erneut beschleunigt und in Richtung erstem Sägezahnstern 50 angetrieben werden. Mit Hilfe eines vierten Bürstenantriebs 76 werden die leeren Transportwagen 60 einsatzbereit vor der Wagensperre 66 am ersten Sägezahnstern 50 angestaut, bevor sie erneut mit Flaschen 40 bestückt werden.

Damit ein lückenloser Ablauf möglich ist, müssen vor den Übergabepunkten an den Sägezahnsternen 50, 52 immer genügend angestaute Transportwagen 60 mit bzw. ohne Behältnisse 40 bereit stehen.

Damit das Verfahren funktioniert, ist es weiterhin wichtig, dass die Transferwege, d.h. das Führungssystem 54 zwischen den Übergabestellen an den Sägezahnsternen 50, 52, nicht mit Transportwagen 60 voll sind, da dann keine Beschleunigung der Transferwagen 60 möglich wäre.

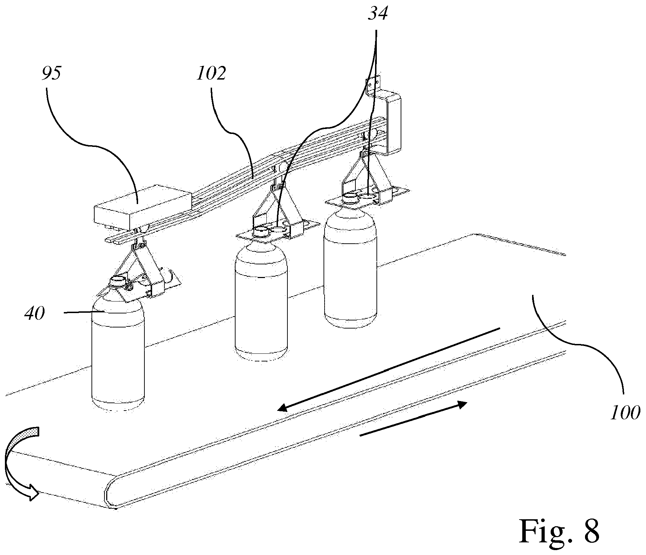

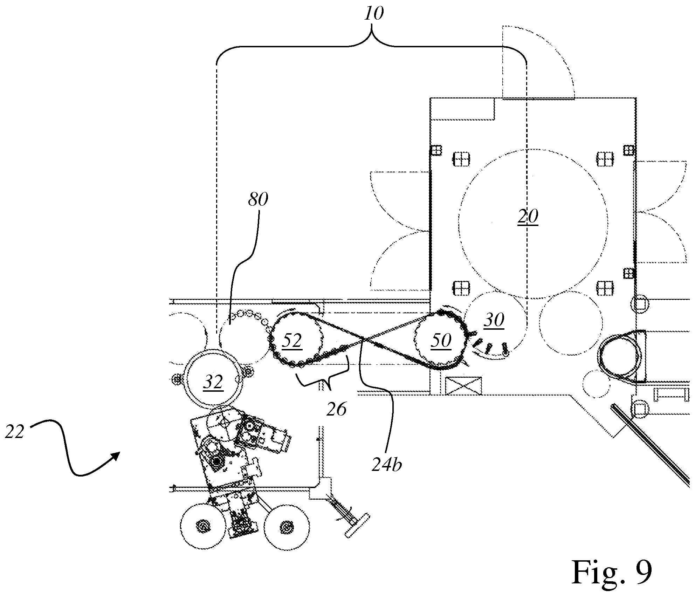

Das beschriebene System ermöglicht somit, vereinzelte Lücken im aus der Blasmaschine 20 ankommenden Behälterstrom zu schließen. Ist aufgrund anderer räumlicher und / oder baulicher Gegebenheiten die Laufrichtung der Etikettiermaschine 22 entgegengesetzt, so muss gegebenenfalls zusätzlich ein weiteres Neckhandlingsystem 80 zwischengeschaltet werden. Alternativ kann ein Behältertransfersystem mit überkreuzter Wagenführung 24b (vergleiche auch Figuren **8****,** **9**) eingesetzt werden.

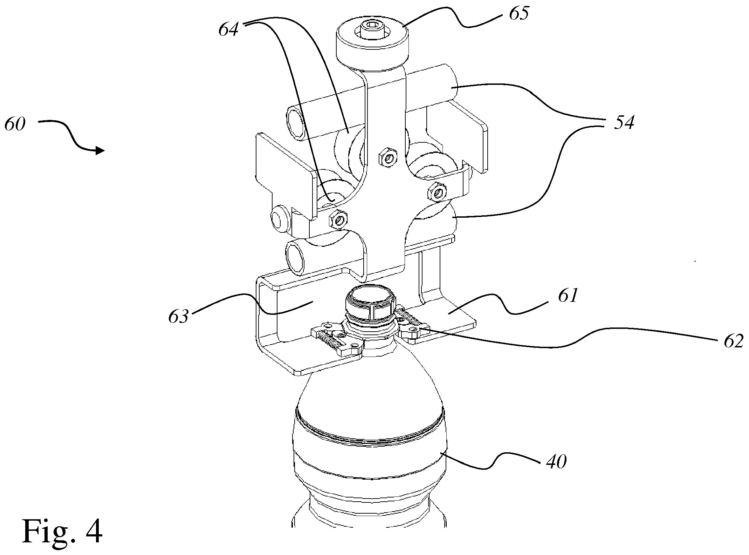

Ein Transportwagen 60 mit passivem Greifsystem 61 und Übergabeöffnung 63 ist in **Figur 4** dargestellt. Die feste und sichere Arretierung der Flasche 40 im passiven Greifsystem 61 wird mittels gespannter Federn 62 sichergestellt. Der Transportwagen 60 wird mittels Rollen 64 im Führungssystem 54 der Behältertransportvorrichtung 24a oder 24b geführt. Die Einzelrolle 65 dient der Führung des Transportwagens 60 durch den Sägezahnstern 50, 52 an den Übergabestellen.

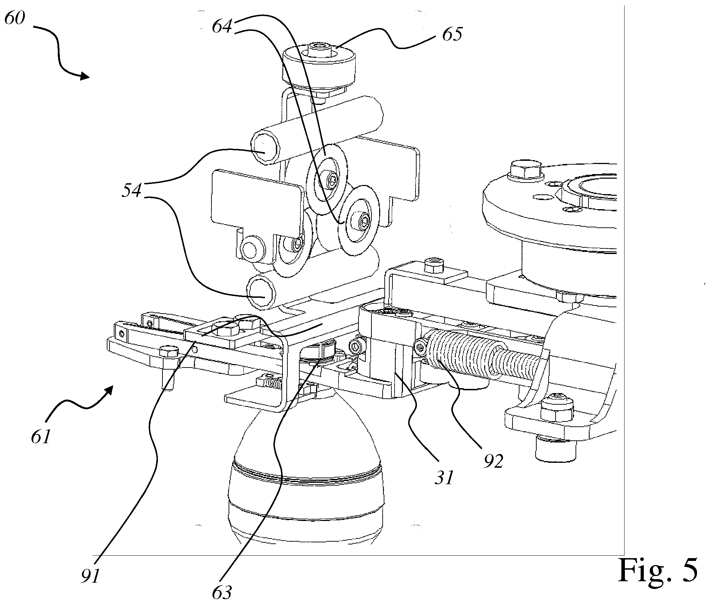

**Figur 5** zeigt einerseits die Übergabe einer Flasche 40 vom Auslaufstern 30 zu einem Transportwagen 60. Beim so genannten Neckhandling, das am Hals der Flasche 40 angreift, öffnet sich die aktive Klammer 31 des Auslaufsterns 30 durch Kurvensteuerung am Übergabepunkt und die Flasche 40 wird durch ein passives Greifsystem 61 eines Transportwagens 60 übernommen. Hierzu greifen die Haltebacken 91 der aktiven Klammer 31 in die Übergabeöffnung 63 des Transportwagens 60. Durch aktives Öffnen der Greiferbacken 91 der aktiven Klammer 31 wird die Flasche 40 freigesetzt und vom Transportwagen 60 übernommen. Die aktive Klammer 31 wird anschließend aus der Übergabeöffnung 63 herausgezogen, während die Flasche 40 im Transportwagen 60 verbleibt.

Weiterhin stellt **Figur 5** die Übergabe einer Flasche 40 vom Transportwagen 60 zum Einlaufstern 32 dar, d.h. die Abbildung verdeutlicht, dass der Transportwagen 60 von zwei entgegengesetzten Seiten her be- bzw. entladen werden kann.

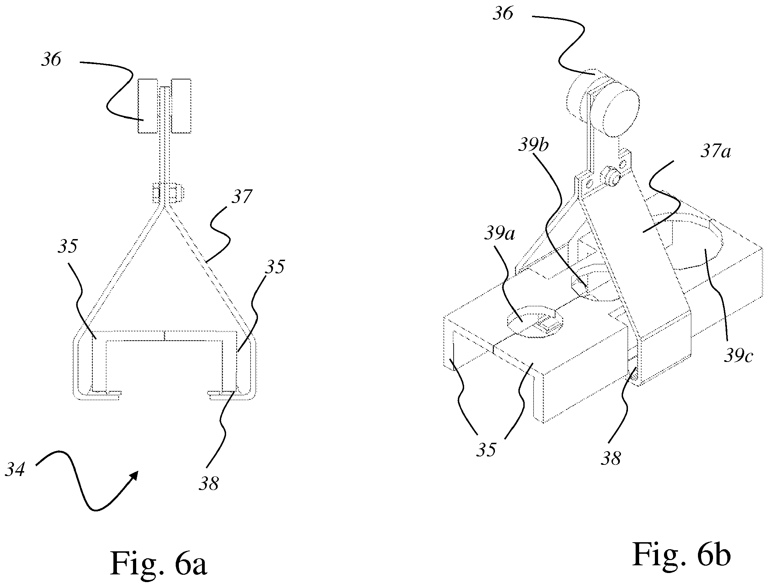

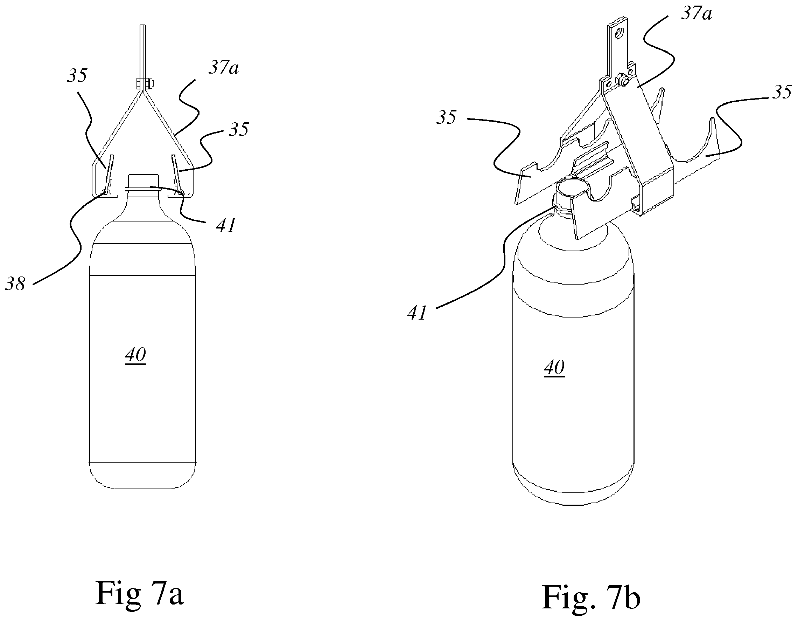

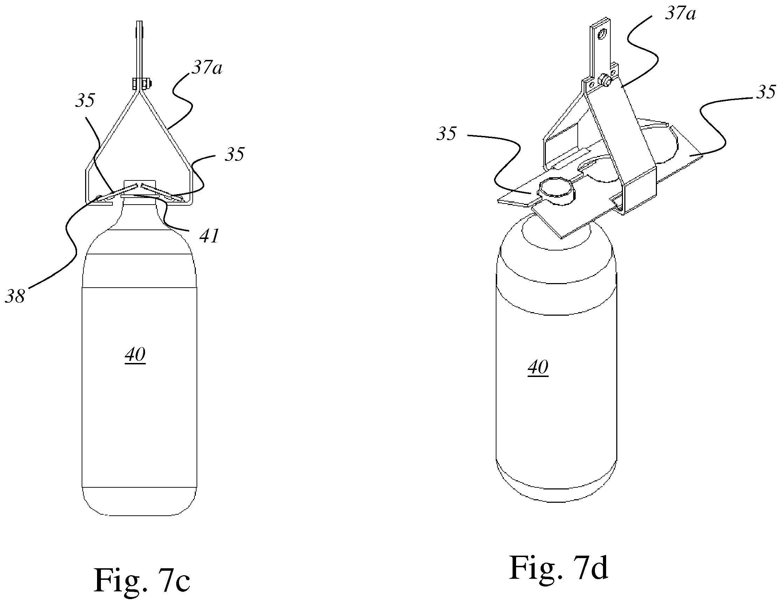

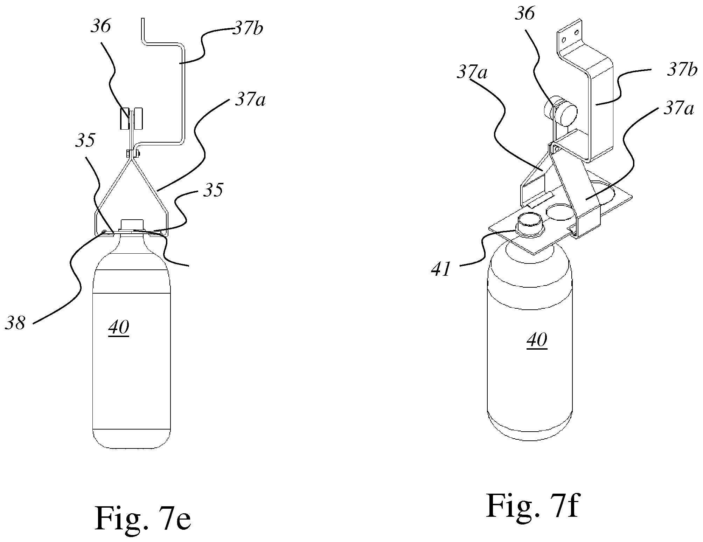

**Figuren 6a bis 7f** zeigen Ausführungsformen für aktive Klammern 34, die beispielsweise an einem Auslaufstern 30 oder an einem Einlaufstern 32 Verwendung finden können. Es handelt sich hierbei um ein Greifsystem, das hauptsächlich dazu geeignet ist, PET-Flaschen 40 oder andere Kunststoffbehältnisse mit Tragring 41 zu greifen. Die Klammer / der Greifer 34 besteht aus mindestens einer Führungsrolle 36, einer Halterung 37, sowie über Scharniere 38 bewegliche Greiferbacken 35. Bei den Scharnieren 38 kann es sich beispielsweise um Drehlager handeln.

Die Besonderheit hierbei liegt im mechanisch oder magnetisch "gesteuerten" Öffnungsmechanismus und in der durch das Gewicht der Flasche 40 gehaltenen Schließstellung. Gemäß einer bevorzugten Ausführungsform bestehen die Greiferbacken 35 der Klammer 34 aus ferromagnetischem Material.

Die vorliegenden Greifer 34 sind einfach aufgebaut. Sie bestehen aus einer Doppelrolle 36, einer Halterung 37a, einer Verbindung zum Kettenglied 37b und zwei Scharnieren 38, über die die Greiferbacken 35 bewegt werden. Anstelle einer Doppelrolle 36 kann beispielsweise auch eine Einzelrolle Verwendung finden. Diese sehr kostengünstige Konstruktion muss gegebenenfalls noch durch Aufsätze an den Kontaktflächen für ein schonenderes Handling und durch die Führungsschienen und Halterung ergänzt werden.

Um unterschiedlichste und kleinste Schulterhöhen der Flaschen 40 und / oder auf eine unterschiedliche Position des Tragringes 41, beispielsweise in Schulterhöhe reagieren zu können, ist es weiterhin möglich, die Klammern 34 noch mit einem zusätzlichen Höhenversatz der Klammern 34 zu versehen, um die Schwenkbewegung möglichst "eben" zu halten. Die Magnete könnten dann in diesem Fall auch eher seitlich angeordnet sein.

Die Klammer 34 kann eine Öffnung 39 entsprechend Breite des Halses der zu transportierenden Flasche 40 aufweisen. Gemäß einer bevorzugten Ausführungsform weist die Klammer 34 verschiedene Öffnungen 39a / 39b / 39c mit verschiedenen Öffnungsbreiten auf, so dass unterschiedliche Flaschen bzw. Behältnisse mit verschiedenen Halsbreiten transportiert werden können.

Nicht gezeigt ist eine vorteilhafte Ausführung, bei der die Klammern 34 teilweise aktiv gesteuert sind. Somit kann entweder auf das gesteuerte Öffnen oder Schließen verzichtet werden. Erreicht wird dies, indem man entweder mindestens eine Zugfeder oder mindestens eine Druckfeder zwischen den Greifbacken 35 oder der Halterung 37a anordnet. Somit können mit einer Druckfeder die Greifbacken automatisch geschlossen werden und müssen nur noch aktiv geöffnet werden. Wenn man mindestens eine Zugfeder zwischen den Greifbacken 35 und der Halterung 37a anordnet, muss die Klammer 34 nur noch geschlossen werden. Je nach Stärke der Feder kann dann die Flasche durch ihre Gewichtskraft die Klammer geschlossen halten.

Die Situation beim Auslauf der Flaschen 40 aus der Blasformmaschine 20 ist in **Figur 8** dargestellt. Beim Greifen der Flasche 40 (nicht dargestellt) fährt der Greifer / die Klammer 34 von oben auf die Flasche 40 hinunter, die gleichzeitig auf einem Transportband befördert wird. Die Flasche 40 muss von unten her abgestützt sein, damit sich die Greiferbacken 35 der Klammer 34 über der Flasche spreizen können. Die Greiferbacken 35 öffnen sich dann durch die Berührung mit dem Halsring 41 selbst. Dadurch ist die Öffnung 39 groß genug, um über den Tragring 41 der Flasche 40 zu passen. Die Klammer 34 wird weiter herabgesenkt, bis sich die Greiferbacken 35 schließlich unterhalb des Tragrings 41 befinden und durch einen Magneten oder durch die eigene Gewichtskraft heruntergezogen werden. Dadurch werden die Greiferbacken 35 wieder geschlossen und graben sich bei einem leichten hochfahren mittels der Führungsschienen unterhalb des Tragrings 41 ein. Danach kann der Transport erfolgen.

Beim in **Figur 8** dargestellten Wiederabstellen auf einem Transportband 100 fährt der Greifer 34, gesteuert von Führungsschienen 102, wieder herunter, bis die Flasche 40 auf dem Band steht und dann weiter, bis er einen derartigen Abstand vom Tragring 41 hat (in der Höhe), dass ein Magnet 95 die beiden Greiferbacken 35 am Tragring 41 vorbei öffnen kann.

Das beschriebene System ist auch für eine Übergabe mit Transportsternen mit gesteuerten Klammern denkbar. Weiterhin ist mit diesem System sowohl der Transport von vollen als auch der Transport von Leerflaschen oder Vorformlingen möglich, wobei die Greifbacken 35 der Klammer 34 gegebenenfalls während des ganzen Transportweges magnetisch in Schließstellung gehalten werden müssen. Alternativ kann anstelle des Magneten 95 auch eine Steuerschiene eingesetzt werden.

**Figur 9** zeigt eine schematische Anordnung eines zwischen einer Blasformmaschine 20 und einer Etikettiermaschine 22 angeordneten Behältertransfersystems mit überkreuzter Wagenführung 24b. Die in der Blasformmaschine 20 hergestellten Flaschen 40 werden über einen Auslaufstern 30 an einen Sägezahnstern 50 eines Behältertransfersystems 24b übergeben und zum Sägezahnstern 52 transportiert, wo sie an ein Neckhandlingsystem 80 und anschließend an den Einlaufstern 32 der Etikettiervorrichtung 22 übergeben werden. Im Gegensatz zum Behältertransfersystem mit gerader Wagenführung 24a kommt dieses System also mit nur einem Neckhandling-system 80 aus. Das System findet insbesondere Verwendung, wenn für die Etikettiervorrichtung 22 eine andere Laufrichtung als im Falle von **Figur 1** benötigt wird.

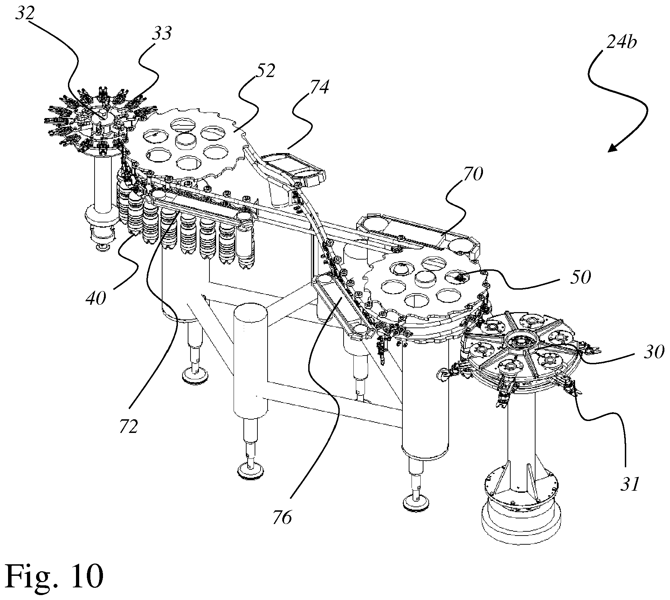

**Figur 10** zeigt eine detaillierte Ansicht des Behältertransfersystems mit überkreuzter Wagenführung 24b. Das Behältertransfersystem 24b besteht ebenfalls aus zwei Sägezahnsternen 50, 52, die durch ein Führungssystem 54 miteinander verbunden sind. Gemäß der dargestellten Ausführungsform besteht das Führungssystem 54 aus zwei parallelen Führungsschienen und ist überkreuzt, so dass die Sägezahnsterne 50, 52 entgegengesetzte Laufrichtungen aufweisen. Das Behältertransfersystem 24b findet also Verwendung, wenn ein Auslaufstern 30 und ein Einlaufstern 32 bzw. ein Neckhandlingsystem 80 mit entgegengesetzter Laufrichtung verwendet werden.

Das Führungssystem 54 ist aufgrund der Überkreuzung stufig ausgebildet, wobei die Schienen 54, in denen die leeren Transporteinheiten 60 zur ersten Übergabeeinheit / zum ersten Sägezahnstern 50 zurückbefördert werden, über die Schienen 54 geführt sind, in denen die mit Behältnissen 40 beladenen Transporteinheiten 60 von der ersten Übergabeeinheit 50 zum zweiten Sägezahnstern 52 transportiert werden.

Weiterhin drehen sich die Transportwagen 60 im Gegensatz zum Behältertransfersystem mit gerader Wagenführung 24a vor der Übergabe an den Einlaufstern 32 des Etikettierers 22 bzw. vor Übergabe an ein Neckhandlingsystem 80 um 180 Grad, so dass deren Halteklammern 33 aus der entgegengesetzten Richtung in den Transportwagen 60 eingreifen, um die Flasche 40 zu übernehmen.

Bei der in den **Figuren 9** **und** **10** gezeigten Ausführungsform entspricht die Laufrichtung der ausgegebenen Flaschen 40 der Laufrichtung des Einlaufsterns 32 der Etikettiervorrichtung 22, so dass auf einen der Zwischensterne verzichtet werden kann.

Die Erfindung wurde unter Bezugnahme auf zwei bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Einrichtung
- 20: Blasformmaschine
- 22: Etikettiervorrichtung
- 24a: Behältertransfersystems mit gerader Wagenführung
- 24b: Behältertransfersystems mit überkreuzter Wagenführung
- 26: Puffer
- 30: Auslaufstern
- 31: Aktive Klammer
- 32: Einlaufstern
- 33: gesteuerte Klammer
- 34: Aktive Klammer
- 35: Greiferbacken
- 36: Doppelrolle
- 37a: Halterung
- 37b: Verbindung zum Kettenglied
- 38: Scharnier
- 39a/b/c: Öffnungen
- 40: Flasche
- 41: Tragring / Halsring
- 50: Sägezahnstern am Auslaufstern der Blasmaschine
- 52: Sägezahnstern am Einlaufstern der Etikettiermaschine
- 54: Führungssystem / Transportschleife
- 60: Transportwagen
- 61: Passives Greifsystem
- 63: Übergabeöffnung
- 64: Führungsrolle / Rolle
- 65: Einzelrolle
- 66: Wagensperre
- 68: Wagenführung
- 70: rotierender Bürstenantrieb / Bürstenförderer
- 72: rotierender Bürstenantrieb / Bürstenförderer
- 74: rotierender Bürstenantrieb / Bürstenförderer
- 76: rotierender Bürstenantrieb / Bürstenförderer
- 80: Neckhandlingsystem
- 90: Greiferbacken
- 92: Feder
- 95: Magnet
- 100: Transportband
- 102: Führungsschiene

## Patentansprüche

1. Vorrichtung umfassend eine erste Bearbeitungsstation (20) und eine zweite Bearbeitungsstation (22) sowie eine Einrichtung (10) zum Transfer von Behältern (40) von der ersten Bearbeitungsstation (20) zu der zweiten Bearbeitungsstation (22) mit
- einer ersten Übergabeeinheit (50);
- einer zweiten Übergabeeinheit (52);
- individuellen Transporteinheiten (60) für die Behälter (40);
- einer Transportschleife (54), die jeweils eine Umlenkung an der ersten und zweiten Übergabeeinheit (50, 52) aufweist und in der die Transporteinheiten (60) geführt sind, wobei die Antriebseinheiten (70, 72, 74, 76) an der Transportschleife (54) angeordnet sind;
wobei eine Antriebseinheit (70, 74) zum Beschleunigen der Transporteinheiten (60) nach jeder Übergabeeinheit (50, 52) angeordnet ist und
wobei eine Antriebseinheit (72, 76) zum Abbremsen der Transporteinheiten (60) vor jeder Übergabeeinheit (50, 52) angeordnet ist, und
- eine Steuereinheit,
wobei die vor der zweiten Übergabeeinheit (52) durch die Antriebseinheit (72) zum Abbremsen der Transporteinheiten angestauten Transporteinheiten (60) einen Puffer (26) bilden; wobei die Transporteinheiten (60) derart gesteuert bewegbar sind, dass der Puffer (26) mit der zweiten Bearbeitungsstation (22) derart zusammen wirkt, dass eine Übergabe der Behälter (40) vom Puffer (26) zur zweiten Bearbeitungsstation (22) zeitsynchron erfolgt.

2. Vorrichtung nach Anspruch 1, wobei an der ersten Übergabeeinheit (50) eine steuerbare Sperrvorrichtung (66) vorgesehen ist, die an der ersten Übergabeeinheit (50) jeweils eine Transporteinheit (60) bei Anlieferung eines Behälters (40) von der ersten Bearbeitungsstation (20) freigibt.

3. Vorrichtung nach einem der Ansprüche 1 und 2, wobei die Transporteinheiten (60) ein passives Greifersystem (61) zum Greifen, Halten und Transportieren von Behältern (40) umfassen.

4. Verfahren zum Transfer von Behältern (40) von einer ersten Bearbeitungsstation (20) zu einer zweiten Bearbeitungsstation (22) einer Vorrichtung nach einem der Ansprüche 1 bis 3, wobei folgenden Schritte durchgeführt werden:
• in dem Puffer (26) werden Transporteinheiten (60) mit Behältern (40) individuell bereitgestellt;
diese Transporteinheiten (60) werden derart gesteuert und individuell verfahren, dass der Puffer (26) mit der zweiten Bearbeitungsstation (22) derart zusammenwirkt, dass die im Puffer (26) gespeicherten Behälter (40) vom Puffer (26) zur zweiten Bearbeitungsstation (22) zeitsynchron übergeben werden.

5. Verfahren nach Anspruch 4, wobei die Behälter (40) vom Puffer (26) zur zweiten Bearbeitungsstation (22) zeitsynchron übergeben werden, unabhängig davon, ob die Behälter (40) zeitsynchron an einer ersten Übergabeeinheit (50) von der ersten Bearbeitungsstation (20) angeliefert werden.

6. Verfahren nach einem der Ansprüche 4 bis 5, wobei leere Transporteinheiten (60) vor der ersten Übergabeeinheit (50) angestaut und mittels einer Sperrvorrichtung (66) kontrolliert zur Aufnahme eines von der ersten Bearbeitungsstation herangeführten Behälters (40) freigesetzt werden.

7. Verfahren nach Anspruch 4, wobei folgende Schritte durchgeführt werden:
• Detektion der Ankunft eines Behälters (40) von der ersten Bearbeitungsstation (20, 30);
• Freigabe einer Transporteinheit (60);
• Aufnahme des Behälters (40) durch die Transporteinheit (60) an der ersten Übergabeeinheit (50);
• Transport des Behälters (40) durch die Transporteinheit (60) zu dem der zweiten Übergabeeinheit (52) zugeordneten Puffer (26) und
• Übergabe eines Behälters (40) an die zweite Bearbeitungsstation (22, 32) an der zweiten Übergabeeinheit.

8. Verfahren nach Anspruch 7, wobei die Freigabe der Transporteinheit (60) mittels einer steuerbaren Sperrvorrichtung (66) erfolgt.

9. Verfahren nach einem der Ansprüche 7 bis 8, wobei die mit einem Behälter (40) bestückte Transporteinheit (60) von der der ersten Übergabeeinheit (50) nachgeschalteten Antriebsvorrichtung (70) beschleunigt wird und wobei die mit einem Behälter (40) bestückte Transporteinheit (60) von der zweiten Übergabeeinheit (52) vorgeschalteten Antriebsvorrichtung (72) abgebremst und gespeichert wird.

10. Verfahren nach einem der Ansprüche 7 bis 9, wobei die gespeicherten Behälter (40) nach Bedarf von der zweiten Übergabeeinheit (52) an die zweite Bearbeitungsstation (22) zur weiteren Verarbeitung übergeben werden.

## Claims

1. An apparatus, comprising a first processing station (20) and a second processing station (22), and also comprising a device (10) for transferring containers (40) from the first processing station (20) to the second processing station (22), with
- a first transfer unit (50);
- a second transfer unit (52);
- individual transport units (60) for the containers (40);
- a transport loop (54), which has a deflection in each case at the first and second transfer units (50, 52), in which transport loop (54) the transport units (60) are guided, wherein the drive units (70, 72, 74, 76) are disposed at the transport loop (54); wherein a drive unit (70, 74) for accelerating the transport units (60) is disposed downstream from each transfer unit (50, 52); and
wherein a drive unit (72, 76) for decelerating the transport units (60) is disposed upstream from each transfer unit (50, 52); and
- a control unit,
wherein the transport units (60), which are banked up upstream from the second transfer unit (52) by the drive unit (72) for decelerating the transport units, form a buffer (26);
wherein the transport units (60) are controlled and movable such that the buffer (26) interacts with the second processing station (22) such that a transfer of the containers (40) from the buffer (26) to the second processing station (22) is carried out time-synchronously.

2. The apparatus as recited in claim 1, wherein a controllable blocking device (66) is provided at the first transfer unit (50), which blocking device (66) releases in each case one transport unit (60) at the first transfer unit (50) when a container (40) is supplied from the first processing station (20).

3. The apparatus as recited in one of the claims 1 and 2, wherein the transport units (60) comprise a passive gripper system (61) for gripping, holding, and transporting containers (40).

4. A method for transferring containers (40) from a first processing station (20) to a second processing station (22) of an apparatus according to one of the claims 1 to 3, wherein following steps are carried out:
- transport units (60) with containers (40) are individually staged in the buffer (26);
- said transport units (60) are controlled and individually moved such that the buffer (26) interacts with the second processing station (22) such that the containers (40) stored in the buffer (26) are transferred time-synchronously from the buffer (26) to the second processing station (22).

5. The method as recited in claim 4, wherein the containers (40) are transferred time-synchronously from the buffer (26) to the second processing station (22) independently of whether the containers (40) are supplied time-synchronously by the first processing station (20) at a first transfer unit (50).

6. The method as recited in one of the claims 4 to 5, wherein empty transport units (60) are banked up upstream from the first transfer unit (50) and are released by means of a blocking device (66) in a controlled manner for receiving a container (40) that is being advanced by the first processing station.

7. The method as recited in claim 4, wherein following steps are carried out:
- detection of the arrival of a container (40) from the first processing station (20);
- release of a transport unit (60);
- reception of the container (40) by the transport unit (60) at the first transfer unit (50);
- transport of the container (40) through the transport unit (60) to the buffer (26) associated with the second transfer unit (52); and
- transfer of a container (40) to the second processing station (22) at the second transfer unit.

8. The method as recited in claim 7, wherein the release of the transport unit (60) is carried out by means of a controllable blocking device (66).

9. The method as recited in one of the claims 7 to 8, wherein the transport unit (60) that is provided with a container (40) is accelerated by the drive unit (70) downstream from the first transfer unit (50), and wherein the transport unit (60) that is provided with a container (40) is decelerated by the drive unit (72) upstream from the second transfer unit (52) and is stored.

10. The method as recited in one of the claims 7 to 9, wherein the stored containers (40) are transferred from the second transfer unit (52) to the second processing station (22), as required, for further processing.

## Revendications

1. Dispositif comprenant un premier poste de traitement (20) et un deuxième poste de traitement (22) ainsi qu'un dispositif (10) destiné au transfert de récipients (40) depuis ledit premier poste de traitement (20) au deuxième poste de traitement (22), comprenant
- une première unité de remise (50);
- une deuxième unité de remise (52);
- des unités de transport (60) individuelles pour les récipients (40);
- une boucle de transport (54) qui présente respectivement un dispositif de renvoi sur les première et deuxième unités de remise (50, 52) et dans laquelle les unités de transport (60) sont guidées,
dans lequel les unités d'entraînement (70, 72, 74, 76) sont disposées sur la boucle de transport (54);
dans lequel une unité d'entraînement (70, 74) destinée à accélérer les unités de transport (60) est disposée en aval de chaque unité de remise (50, 52), et
dans lequel une unité d'entraînement (72, 76) destinée à freiner les unités de transport (60) est disposée en amont de chaque unité de remise (50, 52), et
- une unité de commande,
dans lequel les unités de transport (60) accumulées en amont de la deuxième unité de remise (52) par ladite unité d'entraînement (72) destinée à freiner les unités de transport forment un tampon (26);
dans lequel les unités de transport (60) sont déplaçables de manière commandée de telle sorte que ledit tampon (26) agit de concert avec le deuxième poste de traitement (22) de telle manière qu'une remise des récipients (40) depuis le tampon (26) au deuxième poste de traitement (22) se fait en synchronisme temporel.

2. Dispositif selon la revendication 1, dans lequel un dispositif de blocage (66) commandable est prévu sur ladite première unité de remise (50), qui libère sur la première unité de remise (50) respectivement une unité de transport (60) lorsqu'un récipient (40) est fourni en provenance du premier poste de traitement (20).

3. Dispositif selon l'une quelconque des revendications 1 et 2, dans lequel les unités de transport (60) comprennent un système de préhension (61) passif destiné à saisir, à maintenir et à transporter des récipients (40).

4. Procédé de transfert de récipients (40) depuis un premier poste de traitement (20) à un deuxième poste de traitement (22) d'un dispositif selon l'une quelconque des revendications 1 à 3, dans lequel les étapes suivantes sont mises en oeuvre:
- dans ledit tampon (26), des unités de transport (60) comprenant des récipients (40) sont fournies individuellement;
- ces unités de transport (60) sont déplacées de manière commandée et individuelle de telle sorte que le tampon (26) agit de concert avec le deuxième poste de traitement (22) de telle manière que les récipients (40) stockés dans le tampon (26) sont remis en synchronisme temporel depuis le tampon (26) au deuxième poste de traitement (22).

5. Procédé selon la revendication 4, dans lequel les récipients (40) sont remis en synchronisme temporel depuis le tampon (26) au deuxième poste de traitement (22), indépendamment du fait si les récipients (40) sont fournis en synchronisme temporel sur une première unité de remise (50), en provenance du premier poste de traitement (20).

6. Procédé selon l'une quelconque des revendications 4 à 5, dans lequel des unités de transport (60) vides sont accumulées en amont de la première unité de remise (50) et sont libérées de manière contrôlée, par l'intermédiaire d'un dispositif de blocage (66), pour recevoir un récipient (40) amené depuis le premier poste de traitement.

7. Procédé selon la revendication 4, dans lequel les étapes suivantes sont mises en oeuvre:
- détection de l'arrivée d'un récipient (40) en provenance du premier poste de traitement (20);
- libération d'une unité de transport (60);
- réception du récipient (40) par ladite unité de transport (60) sur la première unité de remise (50);
- transport du récipient (40) par ladite unité de transport (60) vers le tampon (26) associé à la deuxième unité de remise (52); et
- remise d'un récipient (40) au deuxième poste de traitement (22) sur la deuxième unité de remise.

8. Procédé selon la revendication 7, dans lequel la libération de l'unité de transport (60) se fait au moyen d'un dispositif de blocage (66) commandable.

9. Procédé selon l'une quelconque des revendications 7 à 8, dans lequel l'unité de transport (60) munie d'un récipient (40) est accélérée par le dispositif d'entraînement (70) monté en aval de la première unité de remise (50), et dans lequel l'unité de transport (60) munie d'un récipient (40) est freinée par le dispositif d'entraînement (72) monté en amont de la deuxième unité de remise (52) et est stockée.

10. Procédé selon l'une quelconque des revendications 7 à 9, dans lequel les récipients (40) stockés sont remis en cas de besoin depuis la deuxième unité de remise (52) au deuxième poste de traitement (22) pour être traités ultérieurement.
